# EUROPEAN PATENT SPECIFICATION

(11) **EP 4 392 344 B1**
(45) Date of publication and mention of the grant of the patent: **25.02.2026**
(21) Application number: 22786113.5
(22) Date of filing: 27.09.2022
(51) Int. Cl.: B65D 88/14, B65D 88/74

(54) **HIGH PERFORMANCE AERONAUTIC CONTAINER**
AERONAUTISCHER HOCHLEISTUNGSBEHÄLTER
CONTENEUR AÉRONAUTIQUE HAUTE PERFORMANCE

(30) Priority: 29.09.2021 EP 21199655
(43) Date of publication of application: 03.07.2024
(73) Proprietor: Swiss Airtainer SA, 1530 Payerne (CH)
(72) Inventor: MARTIN, Marco, 1400 Yverdon-les-Bains (CH); SELIGMAN, Eduard, 1233 Bernex (CH)
(74) Representative: P&TS SA (AG, Ltd.)
(86) International application number: PCT/IB2022/059174
(87) International publication number: WO 2023/052991

(56) References cited:
- EP-A1- 2 903 900
- EP-A1- 3 355 008
- WO-A2-2004/045987
- WO-A2-2012/047183
- WO-A2-2012/088299
- CN-A- 110 021 728
- CN-A- 110 931 685
- CN-U- 210 972 365
- US-A- 5 979 684
- US-A1- 2007 175 236
- US-A1- 2010 294 782

## Description

### Technical domain

The present invention concerns a container for shipping sensitive and/or high added-value products by air. It relates in particular to thermally regulated aeronautic containers having high energetic performances and allowing cost effective shipment of sensitive products, such as pharmaceutical products.

### Related art

The shipment of sensitive products requires that the temperature is maintained at or under a certain level, or within a certain range of temperatures along the time of travel. Passive means are usually used to limit the internal temperature variation of the container over time. Such passive means include for example Phase Changing Material (PCM) or thermal isolating materials, such a polyurethan or equivalent material, which is combined to the walls of the container. The thickness of the isolating material limits the remaining volume of the container that can be actually used for storing freight. It results in addition of an increase of the weight of the container, which also limits the amount of product that can be shipped.

Passive means need to be combined to an active thermal regulation system for the shipment of the most sensitive products. Such active system is part of the container, it participates to its extra weight and occupies space. In addition, it should be able to work autonomously, which necessitates the presence of a source of energy such as batteries.

It is a recurrent problematic to improve the rentability of the shipment, while controlling the internal temperature of the container all over the transportation time. The rentability of the shipment may be directly related to the maximum possible loading mass, the internal loading volume, the autonomy, the container tare weight, or a combination of several of these parameters. The performances of the material used for maintaining a controlled temperature inside the container is most often related to its weight, cost and/or hindrance. For example, an efficient passive thermal isolation is most likely heavier than a less efficient one or may occupy more space. Although a good passive thermal isolation may allow to reduce the dimensions of the active system, including its weight, or its cost, or its consumption, the global benefit often appears mitigated due to the extra-weight or hindrance of the passive arrangement. On the contrary, a light and thin thermal isolation may require a more powerful, and thus a larger Temperature Control System to compensate the variations of the temperature inside the container. This results on either an increase of consumption and/or weight due to the necessary batteries, and/or a limitation in autonomy. The batteries associated to the Temperature Control System should be adapted to its energy consumption, considering also the degree of autonomy it should have. The most powerful Temperature Control System needs large and heavy batteries, which is prejudicial to the Tara weight of the container and/or its loading volume. It is in addition highlighted that the higher the energy consumption is, the worse the CO₂ footprint is. It is also highlighted that a heavy Tara weight negatively impacts the CO₂ footprint during the air transportation.

It is thus a challenging task to decrease the weight and/or hindrance of the Temperature Control System, including the batteries, which relates to an active means, while maintaining, or even decreasing, the weight and/or hindrance of the passive thermal means of isolation. It is also globally a challenging task to decrease the overall weight and/or hindrance of the container, including the isolation and the batteries, while maintaining the internal loading volume and the degree of autonomy.

Regarding the shipment of sensitive products, it is in addition most often necessary to provide a strong reliability so as to avoid any defects. For example, redundancy or over-dimensions of the key elements may be necessary.

In the field of the aircraft transportation, the regulation determines most of the parameters of the containers. In particular, their shape, dimension, mechanical resistances, fire resistance, fluid leakage and several other performances should comply with strict norms and regulations. One of the major restriction coming from the regulation concerns the position of the container center of gravity (CoG) that must be located close to the base center. This is often an issue when the batteries are located in the Equipment Bay and need to be balanced by a dead-weight on the opposite side of the container. This lead to a significant increase of the container overall weight. It results that decreasing the weight of an aircraft container while complying to all the regulations increases the difficulty compared to other technical fields. It should also be considered that sensitive products such as the pharmaceutical products also needs to comply to strict regulations, at least concerning the storage and shipping conditions.

Beside the thermal performances of an aircraft container, its flexibility of use is also an important parameter. The constraints related to the logistic chain may be very high, regarding at least the time of travel, the geographical areas, the storage conditions at airports, the amount of freight that needs to be shipped, etc. The modulation of the aircraft container on demand thus appears an advantage compared to traditional standard containers. In addition, the limited performances of some containers requires that specific infrastructures are built at the airports, to maintain the proper storage conditions.

Document WO2012047183 discloses Tracking Environmental Deviation System Box (TEDSBOX) having a temperature control system, batteries and passive means of temperature regulation such as an isolation. The internal space is organized so as to optimize the internal storage space. The power supply is integrated to the base of the cargo box to optimize the position of the Center of Gravity. The balance issue appears in service when the batteries are placed in the Equipment Bay. The dead weight necessary on the opposite to compensate them. Also, the power and dimensions of the Temperature Control system is not really object of the optimization. It results that the weight of the batteries remains an important issue.

Due to the mechanical resistance required for an aeronautic container, in particular through the regulation, metallic structure such as aluminum is usually preferred. Such a metallic structure limits the thermal performances of the container, due to the high thermal conductivity of the metal. In addition, the weight of the metallic structure also appears as a limitation. The document WO2004045987 discloses a craft container based on metallic panels between which an isolating foam is spread.

The document US5979684 discloses a cargo container made with sandwich panels based on fiber reinforced plastic, and a light foam core material, adapted for thermal isolation of the freight. However reinforcing beams are necessary to obtain the requested resistance of the container, which provides various free spaces in the sandwich panel structure. It results that an optimal thermal isolation can be difficult to obtain.

There is thus room to improve the performances of the craft containers, from the weight point of view, or for other aspects such as the flexibility, the autonomy, the shipment cost and sustainability, production and maintenance cost and energy consumption.

### Short disclosure of the invention

An aim of the present invention is the provision of an aircraft container, that overcomes the shortcomings and limitations of the state of the art. It is in particular the aim of the present invention to provide a temperature regulated container for aircrafts, being lighter and more reliable than the known containers. It results that the CO₂ emission and the energy consumption has less impact on the environment. This also provides the possibility of more cost effective shipments of temperature sensitive products, without loss of quality. It is thus the objective of the present invention to provide an aircraft container, the weight of which is reduced by 10%, 20%, 30%, 40% or more compared to the known containers. It is the objective to provide an aircraft container having a weight of around 500 kg, or 400 kg or less, while corresponding to all the aircraft regulations applicable to such containers, where the traditional containers have a weight of around 650 kg or more.

It is an object of the present invention to provide an aircraft container having improved passive thermal performances. It is in particular aimed at providing a container the walls of which have a thermal conductivity of around 0,03 W/mK or around 0,02 W/mK or less, while corresponding to all the aircraft regulations applicable to such containers. It is a further aim to provide a container having an overall thermal conductance of less than around 4 W/K, or 3.5 W/K, or less.

Another aim of the present invention is to provide a temperature regulated container for aircrafts, having a better flexibility of use. The container is better adapted to the logistic constraints. It can also be used under severe or demanding conditions, without specific surrounding infrastructures or with limited specific surrounding infrastructures. To this extend, it is aimed at providing a container having larger autonomy and/or being adapted for longer storage conditions, even in absence of dedicated infrastructures.

Another aim of the invention is the provision of a process for making an aircraft container, having weight and/or thermal performances mentioned above.

According to the invention, these aims are attained by the object of the independent claims, and further described by the subject-matter of the dependant claims.

With respect to what is known in the art, the present aircraft container allows a more efficient and flexible container for shipment of sensitive and/or high added value products, such as pharmaceutical products.

### Short description of the drawings

Exemplar embodiments of the invention are disclosed in the description and illustrated by the following drawings:
- Figure 1 : Perspective view of a container according to an example of the present invention
- Figure 2a : Schematic transversal view of a container according to an example of the present invention
- Figure 2b: Schematic view of an insulating wall of a container according to the present invention
- Figure 3a: Exploded schematic view of a container according to an embodiment of the present invention
- Figure 3b: Exploded schematic view of a container according to another embodiment of the present invention
- Figure 4 : Schematic perspective view of a tray for batteries according to an example of the present invention
- Figure 5: Schematic exploded view of a tray for batteries according to an example of the present invention

### Examples of embodiments of the present invention

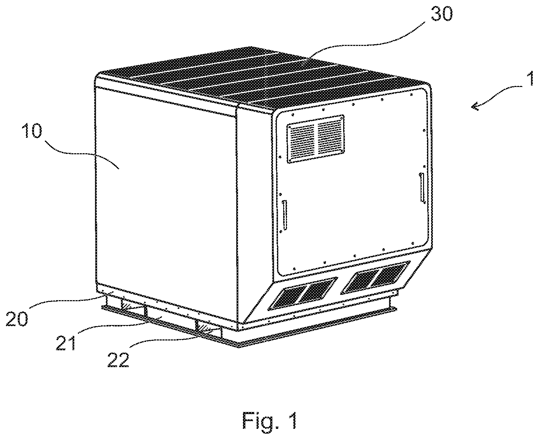

With reference to figures 1, 2, 3a and 3b, the container **1** of the present disclosure comprises a storage box **10,** also known as a thermally insulated chamber. The storage box is defined by walls **11** defining an internal storage volume **12,** corresponding to the payload compartment, dedicated to the freight. Some or all of the walls are thermally insulated. The walls **11** comprise lateral walls and a top wall defining a roof. The container **1** may also comprise technical volume **13,** comprising at least some of the technical devices used for actively controlling the temperature inside the container **1.** As an example, the technical volume **13** may comprise one or more of a Temperature Control System (TCS) **14** and an Electrical Power System (EPS) **15,** adapted to manage the energy from various sources, such as battery or solar panels. The technical volume **13** may comprise all or part of the Temperature Control System (TCS) **14.** This includes for example the necessary compressor, evaporator, condenser and the corresponding pipes and fans. The technical volume **13** may also be used to lodge one or several extra battery modules. For example, up to 3 extra battery modules can be lodged in this technical volume. The technical volume is separated from the storage volume **12** by an internal wall, which can be also be thermally insulated. Such internal wall may be provided with any openings, air ducts, filters, sensors, necessary to allow the Temperature Control System (TCS) **14** to actively regulate the thermal conditions of the storage volume **12.**

The container **1** has a base **20** on which is arranged the storage box **10,** comprising forklift tunnels **22** and a central housing **21,** placed between the two forklift tunnels **22.** The central housing **21** is a hollow space adapted to receive the batteries **210** or any equivalent storage means of electrical power. Although the base **20** may have additional hollow space outside the forklift tunnels **22,** meaning on lateral positions of the base **20** these lateral hollow spaces are preferably kept empty to maintain the weight of the container under a certain limit.

According to an embodiment, the top surface of the base **20** is flat and the bottom surface of the storage box **10** is also flat, so that the lateral empty spaces of the base 20 cannot receive freight.

Thus, all the batteries **210** of the container **1** are housed in the reduced spaced between the two forklift tunnels **22.** Such a disposition necessitates to limit the hindrance of the batteries **210** so that all the batteries are lodged in the central housing **21.** In addition, due to a less hindrance of the batteries, a more loading weight may be available. The height of the batteries **210** is also limited. The storage volume **12** is thus improved. It is here understood that the reduced size of the batteries **210** is possible due to the high thermal performances of the walls **11** of the container **1.**

The TCS **14** and the power delivered by the batteries **210** are correlated. In particular, the TCS **14,** and more precisely, its compressor (not shown) is a low weight and low consumption compressor. The compressor may advantageously be a micro-rotative compressor. Its weight is preferably below 1 kg, or around 800 g or below. The TCS **14** may comprise two or more compressors for a better redundancy and a better reliability, without negative impact on the amount of freight. Alternatively or in addition, more than 1 TCS may be included for a more complete redundancy. In other words, the weight gain due to the compact and light thermal active system can be exploits for a better reliability. The TCS **14** may alternatively or in addition comprise two independent electronic control and command arrangements. Other redundancy can be applied, such as communication arrangements, without prejudice of the amount of freight. It is here highlighted that such reduced size of the TCS depends on the thermal performances of the walls **11.**

According to an advantageous embodiment, the TCS **14,** and in particular its compressor, or its set of compressors, allows a very precise temperature control inside the container **1.** The rotation speed of such a compressor, mainly when it is a micro-rotative compressor, can be closely related to the temperature gap or the temperature variation. In consequence, the energy consumption is better controlled. At least, peaks of energy consumption can be avoided or limited. This arrangement provides the advantage that beside the global low average consumption, the temporary maximal energy consumption can also decrease, so that the batteries do not need to provide too high instantaneous power. Such a smooth temperature management thus allows to decrease the weight and/or hindrance of the batteries, and/or to decrease their cost. This also allows to choose electrical components (connectors, wires, relays, fuses, etc) with a lower maximal current limit, thus reducing their size, their mass and/or their price.

According to a specific arrangement, the TCS **14** is connected to some integrated or remote computational means adapted to anticipate the temperature variations so that the compressor can be activated in anticipation to maintain the temperature at the right level with lower energy consumption since it avoid peaks of consumption. Such an integrated or remote computational means can rely on external thermal sensors arranged on the container or at a remote location. The temperature can also be smoothly managed to anticipate a strong and fast variation. This can be the case for example at the arrival of the aircraft at a warm country, or when storing the container **1** outside, under sun, or on the contrary under very cold conditions.

Flexibility and/or reliability is thus increased without prejudice on the weight of the container **1,** and/or on the weight of freight.

It is understood that the TCS **14** denotes any thermal control system, including refrigeration systems and heating systems. The container of the present disclosure is thus provided with a cooling or a heating system or both of a cooling and heating system. To this end, reduction of the global weight of the container allows to include both cooling and heating systems, increasing in consequence its performances and/or its flexibility.

The container of the present disclosure can in addition comprise one or several solar panels **30,** either integrated or combined to one or more of its walls. The solar panels **30** are preferably placed on the top surface of the container **1.** When integrated to a wall, it can be integrated during the manufacturing process of the wall. Alternatively, it can be integrated to the wall during post manufacturing steps. When it is combined to a wall, the solar panel **30** can be permanently linked to the container, by any suitable means such as gluing, welding, screwing and equivalent. Alternatively, it can be removably linked to the container **1** so that it can be easily added or removed on demand, according to the freight conditions or maintenance purposes. Fast clamping means or any other fixation means may be used to this end. The solar panel **30** is electrically connected to the batteries **210** and/or to the active thermal system or parts of the active thermal system such as the Electrical Power System (EPS).

The surface of the solar panels **30** may approximately correspond to the surface of the top of the container **1.** The solar panels can for example occupy half of the top surface or 70 % or 80 % or more than 90 % of the top of the container **1.** As an example, the surface adapted to receive one or several solar panels **30** can be of around 2 m² to 3 m² for standard small container, of the RKN type. For such a surface, the weight of the solar panels **30** is kept to around 5 to 7 kg. It is understood that the surface occupied by the solar panels, as well as their properties, can easily be adapted according to the use. Preferably, a container comprises at least two independent solar panels so as to provide redundancy.

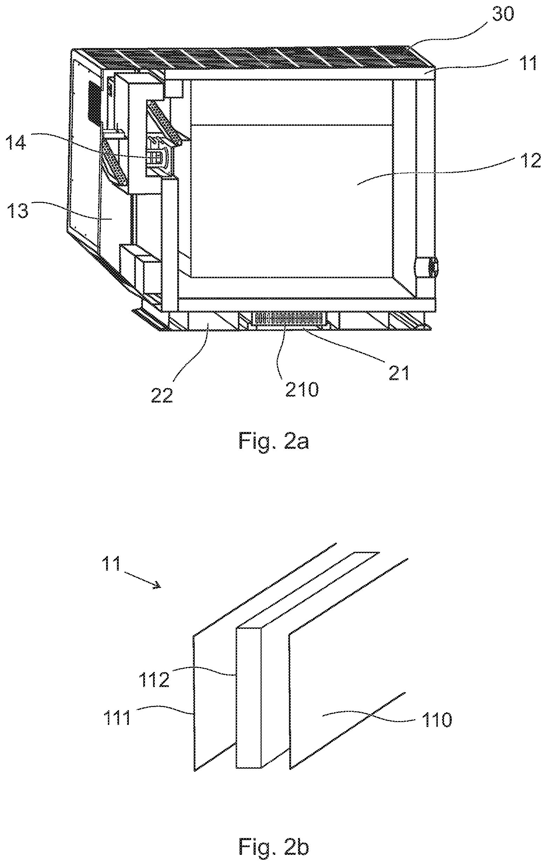

As mentioned above, the size and weight of the batteries **210,** as well as the size and weight of the TCS **14,** strongly depends on the thermal performances of the walls **11** of the container **1.** The walls **11** of the present container **1** typically comprise at least a first panel **110** and a thermally insulating material **112** combined to the first panel **110** (figure 2b). Preferably a wall **11** of the container **1** comprises a first panel **110** and a second panel **111** facing each other and an insulating material **112** arranged between the first and the second panels. Using thicker insulating material already used in the current containers, results in an increase of weight and reduces the volume available for the freight. Usual thermal insulating materials in this field have a density of around 80 kg/m³ or even higher. Increasing the amount of such insulating material thus increases the global weight as well as it reduces the storage volume of the container **1.** The insulating material **112** is thus selected among materials having a density lower than 60 kg/m³, preferably lower than 50 kg/m³ or even around 30 kg/m³ or lower. A polyurethan based foam can be used as such.

Beside its density, the insulating material is selected to have a lower thermal conductivity compared to the commonly used material. The thermal conductivity of the usual insulating material is around 0,03 W/mK. The insulating material **112** of the present disclosure is preferably selected among materials having a thermal conductivity lower than 0,03 W/mK, preferably lower than 0.02 W/mK, or around 0.018 W/mK or lower.

For an improved thermal isolation, the insulating material **112** of the present disclosure has both a density lower than 60 kg/m³ and a thermal conductivity lower than 0.03 W/mK, or 0.2 W/mK.

As an example, the selected insulating material **112,** has a density of around 30 kg/m³ and thermal conductivity of 0,02 W/mK or lower, such as around 0.018 W/mK or 0.016 W/mK.

According to a preferred embodiment, the insulating material is a rigid panel or a combination of rigid panels which can take all the internal space of the first panel **110** and the second panel **111.**

Although the insulating material **112** can be combined to the traditional metallic structures of the containers, it is preferably combined to a lighter material such as a polymeric or a multi-component material, such as composite material or a combination thereof. The aluminium currently used as structure for the container **1,** has a high thermal conductivity which is prejudicial to the thermal performances. In addition, it is heavy and thus represents an issue with regards to the tare weight.

The insulating walls **11** of the container **1** preferably comprise an insulating material **112** combined to a non-metallic structural panel **110, 111.** The insulating material **112** has most advantageously the density and/or the thermal conductivity above-mentioned. The non-metallic structural plate preferably comprises carbon fibre or glass fibre or composite materials or a combination thereof. This provides the advantage of a lighter structure having a lower thermal conductivity. The non-metallic structural panels **110, 111** provide the mechanical resistance of the container **1.** They represents the skin of the assembly in case of a sandwich arrangement.

The insulating walls **11** of the present container **1** has both an improved insulating material **112** as above described and a non-metallic structure. The improved insulating material **112** has the form of rigid panels and the structural arrangement has the form of non-metallic panels, forming a sandwich structure together with the panels of the insulating material. More particularly, the non-metallic panels of the structural arrangement denotes panels made of composite material.

Regarding the structure of the container **1,** it should resist to a load of several tons, according to the corresponding regulation. Where a composite material comprising fibres is used instead of a metallic structure, the same resistance should be demonstrated.

According to an embodiment, the internal space of the walls **11,** defined by the panels of the structural arrangement, is free of any reinforcing element, such as beams, so that the panels of insulating material **112** can occupy all the free space between the panels of the structural arrangement, or at least more than 90 %, or more than 95 % or more than 99% of the space between the panels of the structural arrangement. Thus, the panels of insulating material **112** can be combined to the first panel **110** of the structural arrangement before the second panel **111** of the structural arrangement is further added on the opposite face of the panels of insulating material **112.** It results that the quality of the thermal isolation can easily be visually controlled during the production of the walls **11.** In addition, the dimensions of the panels of insulating material **112** is well adapted to the panels of the structural arrangement, which avoids any voids or lack of insulation material.

In addition, once the panels of the structural arrangement **110, 111** and the panels of insulating material 112 are arranged together, they can be processed in one step under suitable conditions of pressure and temperature. In other words, there is no necessity to firstly arrange the panels of the structural arrangement and maintain them at a proper interval and fill the internal space with a foam in a separate step, as it is currently done with none rigid insulating material.

The insulating material **112,** as rigid panels, participates to the resistance of the walls **11.** This means that in absence of reinforcing internal elements such as internal beams, the rigid panels of insulating material provides the necessary reinforcing action. Thus, the performance of the thermal insulation is high, since there is no voids of insulating material, while the resistance of the wall remains good.

According to an embodiment, the panels of the structural arrangement, in particular when they are made on non-metallic material, can comprise external reinforcing structures. Such an external reinforcing structure can be for example local higher thickness of the non-metallic material. Alternatively, the external reinforcing structure can comprise beams, which can be metallic or non metallic. For example, angled metallic bars can be arranged at the edges between two contiguous walls or between the lateral walls or some of the lateral walls and the top surface.

So as to improve the global mechanical resistance of the non-metallic panels of the structural arrangement, forming the skin, the non-metallic panels can be moulded so as to form at least two angular walls in one block. By this way, there is no separation of the structural panels at each angles of the container 1, as it will be better described below. Furthermore, the non-metallic panels of the structural arrangement comprise fibres, such as glass or carbon fibres, which are preferably oriented so as to cross an angle between two contiguous walls made of one block. The panels of the structural arrangement, or some of them, may comprise additional reinforcing fibbers, or tails, or any other material known to improve the mechanical performances of the panel. A panel of the structural arrangement may be for example of a type of prepreg composite material.

A panel of the structural arrangement may be in particular a composite prepreg or equivalent prepared combination of a matrix and reinforcing Fiber material for industrial use. The matrix may be chosen according to the needs. It is for example a plastic material, like duroplastic epoxy resin. The matrix system is preferably adapted for low pressure and low temperature curing. The viscosity of the material preferably remains low at curing temperature. The reinforcing fibres may be chosen according to the needs. For example, the fibres may comprise or be arranged in an even composition, like twill 2x2, or combined. In case of combined fibbers, they can be combined unidirectionally, or form multiaxial or bidirectional fabrics. The type of reinforcing fibbers can also be selected by the skilled practitioner according to the needs. They can be selected among E-Glass, S-Glass, Carbon, Aramid or combination thereof. The area weight is preferably comprised between 120 and 1500 kg/m². The resulting composite material can be a prepreg having nominal resin content from 20 to 65 weight %.

The insulating material **112** may be selected among any known insulating material having the properties above-defined, in particular in terms of density and thermal conductivity. It is understood that a foam is not a preferred insulating material **112** since the density and/or the thermal conductivity may be not homogenous or precisely controllable. The insulating material is thus preferably under rigid panel, prepared prior the manufacturing of the present container **1** according to any suitable process. For example, the insulating material may be a material comprising or based on polyisocyanurate (PIR). It can be packaged as panels having predefined dimensions, having square or rectangular shape and a predefined thickness. The thickness may be defined according to the expected overall thermal performances of the container. A thickness of 2 to 5 cm, or from 4 to 10 cm, or from 6 to 20 cm can be for example selected depending on the needs. Globally, the overall thickness of the walls of the container, including the structural arrangement 110, 111, and the insulating material 112, should correspond to the applicable regulation.

The container **1** may comprise one or more intermediate layers **201** between the base **20** and the lower part of the box.

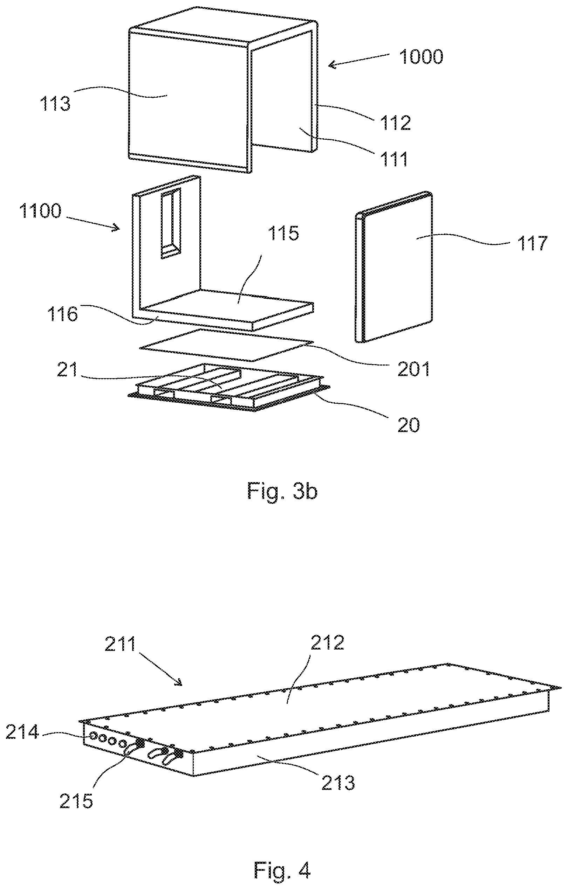

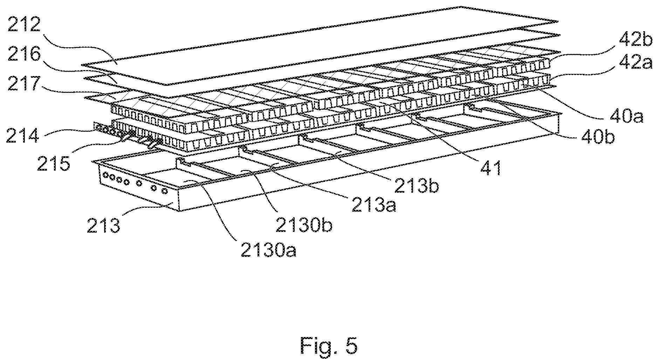

It is to be understood that the thermal insulation above described allows to reduce the dimensions and the weight of the active thermal system, including the batteries **210.** There is thus a double benefit of the disclosed container **1.** The disclosed container 1 can however comprise the insulated walls as described above, combined to a traditional TCS. The present container however preferably comprises a low consumption optimized TCS **14.** The batteries module **210** lodged in the central housing **21** are packed in a rigid tray **211** having edges **213** and a lid **212** so that they are protected against chocs and water (fig.4). The tray **211** can be in metal, in composite material or in a suitable hard polymer. The height of the edges **211** of the tray **213** is at least equal to the thickness of the batteries module 210. The tray **211** thus prevents the batteries **210** to be in contact with water, in case of rain and bad storage conditions of the container **1.** It also contains any accidental leakage from the batteries **210.** The tray **211** comprises at least one internal wall **213a, 213b** defining separate internal areas **2130a, 2130b** (fig.5). The internal walls limit the contamination from one internal area to the other one, and thus improves the safety of the batteries **210** in case of failure or water contamination.

The tray **211** comprises at least one external electrical connection means **215** to allow an easy plugging operation with the EPS or any other electrical devices of the container **1.** This external electrical connection is internally linked to the batteries contained in the tray **211,** either individually or through a common connection.

The tray **211** may in addition comprise one or more air permeable devices **214,** allowing exchange of air and/or humidity between the internal space of the tray **211** and the outside environment, while preventing the passage of liquids. Such device can be for example a breather valve (GorTex valve). The tray **211,** when tightly closed with the lid **212** can thus resist to pressure variations without deformation.

The exploded view of figure 5 better shows the arrangement of the battery cells within the tray **211.** A set of several battery cells are packed together to form at least one battery module **40a, 40b.** For example, a set of 40 battery cells can form a battery module **40a, 40b.** Several battery modules **40a, 40b** are combined to form the full power pack inside the tray **211..** For example, 6 battery modules can be combined to provided a battery pack of 240 battery cells. In a given battery module **40a, 40b,** the battery cells are placed at a horizontal position. In other words, their larger dimension is oriented according to a horizontal direction. Such an arrangement allows to minimize the thickness of the power pack and save storage space in the payload compartment of the container 1. Several battery modules **40a, 40b** can be aligned in the tray **211** in a way that each internal areas **2130a, 2130b** receives a battery module **40a, 40b.** Each battery module is arranged within a fixation box **42.** Such a fixation box can have for example, a lower part **42a,** permanently fixed to the tray **211,** and a cover part **42b** that can be removably fixed to the lower part **42a** so as to maintain the corresponding battery module. The material of the fixation boxes is preferably non electrostatic and electrically insulated. A fixation box also acts as a second protective layer, in particular in case of internal leakage or external liquid contamination.

The tray **211** may comprise one or several sealing elements **217** and additional protection elements **216.** Such a protection element may be a compression foam. For example, the power pack can comprise one long external O-ring sealing.

The modular arrangement of the battery modules **40a, 40b** allows to conveniently adapt the autonomy and/or the weight of the container **1.** Since the batteries are placed at a central position, one or several battery modules **40a, 40b** can be removed without providing a significant unsymmetrical weight load. No counterweight is necessary.

Depending on the anticipated energy consumption, the number of battery modules **40a, 40b** can easily be adapted.

The battery cells are preferably selected among the Nickel-metal hydride (NiMH) cell type. They are rechargeable.

The solar panels are electrically connected to the Electrical Power System (EPS) **15** of the corresponding container **1.** A container according to the present disclosure may in addition comprise an electrical connection means accessible from outside the container and allowing to connect two containers **1,** or to connect a container to a supply source. Several containers 1 can thus be interconnected and/or branched on the power supply of the local infrastructure of an airport. The combined solar panels thus allows to better distribute the energy to several containers 1. This can be convenient in case battery level of some container is lower than a certain threshold. Such an arrangement also allows to combine containers which are equipped with solar panels, with containers which do not comprise solar panels.

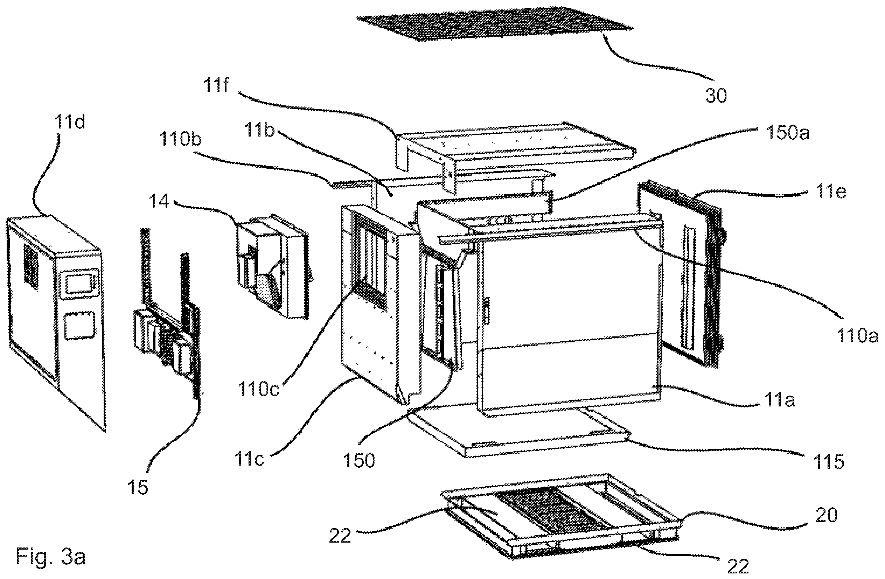

An embodiment of the present disclosure is better shown in figure 3a. The container according to such arrangement comprises a first **11a** and a second **11b** lateral walls, which are thermally insulated, as above described. The container also comprises a top wall **11f,** defining the roof, and a third lateral wall **11e,** comprising an openable part to access the storage volume **12.** The top wall **11f** as well as the other walls of the container are made of composite material or comprise composite material. All the top wall and the lateral walls **11a, 11b, 11d** comprise the insulating material above mentioned sandwiched between two non-metallic panels. The container **1** may comprise one or several internal walls **11c,** providing distinct compartments inside the container 1. For example, an internal **wall 11c** may be provided as the fourth lateral wall, which closes the storage volume **12,** together with the first **11a,** the second **11b** and the third **11e** lateral walls. Some profiles **110a, 110b** are advantageously provided at the top edge of the lateral walls. Such profiles may be made of polymer and glued on the walls. The internal wall **11c** preferably comprises the insulating material **112** above mentioned, sandwiched between two panels **110, 111.** The internal wall **11c** separates the storage volume **12** from a technical volume **13,** comprising at least some of the technical devices used for actively controlling the temperature inside the container **1.** The technical volume **13** comprises a Temperature Control System (TCS) **14** and an Electrical Power System (EPS) **15,** adapted to manage the energy from various sources, such as battery or solar panels. The technical volume **13** comprises the necessary compressor, evaporator, condenser, the SCS and the corresponding pipes and fans. The technical volume **13** may also be used to lodge one or several extra battery modules. The internal wall**11c** is provided with one or more openings **110c** allowing a controlled communication between the storage volume **12** and the technical volume **13.** Such opening **110c** may be grids, potentially comprising filters and allowing air flows. Alternatively, the opening **110c** may be holes adapted for the passage of pipes. The technical volume may be closed by an external wall **11d.** Such an external wall **11d** can be a cover. The wall **11d** may also be known as an equipment bay.

The container **1** comprises air distribution ducts **150, 150a,** allowing to actively modulate the thermal conditions inside the storage volume **12.** The air distribution ducts **150, 150a,** are in flow communication with the TCS **14** through the internal wall **11c.**

According to another embodiment better shown in figure 3b, the container **1** comprises a U-shape structure **1000** defining the top and two opposite lateral walls **11.** The U-shape structure **1000** is a one bloc piece having an external layer **113** and an insulating material **112** associated to the external layer **113.** It can in addition have an internal layer **111,** being of same or different material than the external layer **113.** The external layer **113** comprises fibres, either carbon or glass fibres, they are organized to avoid any disruption between the lateral walls and the top surface of the U-shape element **1000.** The fibres within the non-metallic material are oriented according to a privilege direction crossing the angles between the lateral walls and the top surface.

The container 1 has also a L-shape structure **1100,** adapted to be combined to the U-shape structure **1000.** It is a one bloc piece forming the lower part of the box and a third lateral wall. The L-shape structure **1100** also comprises an insulating material **112,** above described.

One or both of the U-shape **1000** and the L-shape 1100 elements may comprise in addition local reinforcing structural elements such as transversal beams.

The present invention further encompasses a process for manufacturing a container 1. At least it relates to a process for manufacturing the insulating walls.

The present process comprises a step of moulding structural plates or panels based on fibre-containing material such as a glass fibre material. Usual moulding conditions can be applied depending on the material and the needs. The fibres are oriented along a privilege direction. The structural panels correspond to the layers used in the more rigid part of the walls **11** and surrounding the insulating material 112. Panel may be flat and have an homogenous thickness. The moulding step allows however different tridimensionality shapes of the panels. For example, the U-shape and L-shape structures can be provided according to the present process. In particular, a panel of the structural arrangement may be moulded so as to define two or more contiguous walls of the container **1.** To this end, the panels can be angled and form a ridge. Two contiguous walls may define two lateral walls, or a lateral wall and the top, or a lateral wall and the bottom.

For example, the thickness of a plate or panel may vary locally and precisely in order to create local reinforcements. This allows to have an optimized structure in terms of resistance vs weight. In case an angle is formed, the fibres of the final structure may be oriented in an orthogonal direction, compared to the direction of the ridge resulting from the angular position of the panels.

The manufacturing process comprises a combination step of combining the plates or panel above-mentioned with an insulating material. The insulating material **112** is preferably also under the form of panels.

The combination step includes contacting a panel of the structural arrangement such as first panel **110** or a second panel **111** above defined, and the insulating material **112** under a predetermined pressure at a predetermined temperature. The combination is made so that all the surface of the structural panel is covered with the insulating material **112.** In case of a large structural panel **110, 111,** several panels of insulating material **112** can be juxtaposed so as to cover all the surface. The conditions of the combination step are determined according to the nature, dimensions, of the insulating material **112** and/or the panels of structural arrangement **110, 111.** In particular, the conditions are determined so as to guaranty an homogenous adhesion of the panels of insulating material **112** and the corresponding panels of the structural arrangement **110, 111.** The conditions also allow to prevent any delamination withing the panels of insulating material **112.** In other words, the integrity of the insulating material should be preserved during the manufacturing, and also after, during use and aging of the container **1.** The predetermined pressure may be comprised between 50 kPa (0.5 bars) and around 400 kPa (4 bars) or 200 kPa (2 bars). It can be, for example, around 100 kPa (1 bar). The pressure applied to the plates from outside, may be combined to, or followed with a vacuum applied to the internal structure. Such a vacuum may be for example comprised between around -10 kPa (-0.1 bar) and -80 kPa (-0.8 bar), for example around -20 kPa (-0.2 bar) or -30 kPa (-0.3 bar). A curing temperature is applied during part or all of the pressure application and/or vacuum application. The curing temperature is adapted according to the nature of the handled materials. As an example, a temperature comprised between 90 °C and 150 °C, preferably between 100 °C and 120°C, may be applied. The curing temperature may be constant and corresponding to a predetermined value. Alternatively, the curing temperature may have a profile moving from several values over time. The insulating material is preferably presented as a bloc of material having a parallelepipedal shape. The insulating material has the density lower than 60 kg/m3 , preferably lower than 50 kg/m3 , around 30 kg/m3 or lower. The insulating material has preferably the thermal conductivity described above. The insulating material 112 is as above defined. It is preferably based on polyurethan foam. It can be for example a PIR, or a PIR premium based product, such as PIR Premium Plus. The pressure and thermal conditions are adapted to avoid any degradation of the insulating material, and in particular to guarantee that the integrity of the insulating material remains stable during the process and over time. Delamination of the insulating material is more particularly avoided.

During the combination step, the insulating material may be combined to only one panel, corresponding for example to the external walls of the container. Alternatively, the insulating material may be combined to two panels so as to be arranged in sandwich between these two panels. Such a sandwich arrangement may be performed in a single step or in two successive steps under same or different conditions. The insulating material is combined to the non-metallic fibre containing material under the manufacturing conditions. It is in particular not necessary to add any additional adhesive material. The pressure conditions and the temperature conditions are adapted to provide a good and reliable adhesion of the insulating material to the non-metallic fibre containing plates.

For example, the manufacturing conditions may be particularly adapted for prepreg composite materials allowing to adhere to the panels of insulating material **112.** However, other related materials can be used.

The present process preferably not comprises any step of inserting a layer of additional material between the panels of structural arrangement **110, 111** and the panels of insulating material **112,** so that a direct adhesion occurs during the process. It is however still possible to include such an intermediate layer, for example, for improving the adhesion between the panels of the structural arrangement **110, 111** and the panels of insulating material **112.** For example, a thin prepreg intermediate layer may be used to this end. Alternatively, one or both of the panels of structural arrangement **110, 111** and panels of insulating material **112** may be coated with a layer of adhesive material prior the combination step above described.

The above-mentioned embodiments are not understood to be mutually exclusive. They all describe the present invention and can be combined or mixed where applicable.

### Example

The following cure cycle descriptions define general process parameter limits. A specific curing shall be defined by the manufacturer during prototyping utilizing local machinery and process control.
cure cycle for sandwich lay-up containing PIR sandwich
   - heat-up rate: 0,5-4 K/min
   - pressure difference : 50 to 150 kPa (0.5 to 1.5 bar) with minimal vacuum of -30 kPa (-0.3 bar)
   - temperature : 80 to 110 °C + tolerance range +-5 K
   - minimal curing time for specific curing temperatures: 415' at 85°C; 175' at 95°C; 100' at 105°C; 65' at 115°C
   - cool-down rate : 1-5 K/min to at least 60°C or lower
cure cycle for monolithic or sandwich lay-up without PIR
   - heat-up rate: 0,5-5 K/min
   - pressure difference: 100 to 400 kPa (1 to 4 bar) with minimal vacuum of -30 kPa (-0.3 bar)
   - temperature : 90 to 135°C + tolerance range +-5 K
   - minimal curing time for specific curing temperatures: 175' at 95°C; 100' at 105°C; 65' at 115°C
   - cool-down rate : 1-5 K/min to at least 60°C or lower.

The following aspects are also part of the present disclosure: in the present container, the batteries cells are packed in a tray 211 arranged in a central housing 21, the tray having edges 213 and a lid 212, wherein the height of the edges is equal or larger than the thickness of the batteries cells.

In the present container, the tray 211 further comprises at least one internal wall 213a, 213b defining internal areas 2130a, 2130b. The batteries cells are packed as 6 battery modules (40a, 40b) to form a power pack. Each battery module 40a, 40b is arranged in a corresponding internal area 2130a, 2130b of the tray 211.

The tray 211 can comprises an external electrical connection means 215 internally linked to the batteries 210. The tray 211 can further comprise one or more air permeable devices 214 such as a breather valve, allowing exchange of air and/or humidity between the internal space of the tray 211 and the outside environment, while preventing the passage of liquids.

The battery cells can be of NiMH type and arranged so that their larger dimension is oriented in an horizontal plan.

The container can comprise independent insulated walls and a top insulated wall.

The container can further comprise one or several solar panels 30 being removable or not.

The present process for manufacturing a container comprises a moulding step to provide non-metallic fibre containing panels, wherein the fibres are oriented according to a privilege direction.

The process comprises a combination step of combining said panel with an insulating material 112, preferably without adhesive material.

The container here described denotes any thermo Controlled Container commonly used with aircrafts. They include different size and type of container, such as the RKN type, the RAP type container and any other recognized type.

### reference symbols in the figures

- 1: Container
- 10: Storage box
- 11: Walls
- 110: First panel of the structural arrangement
- 111: Second panel of the structural arrangement
- 1000: U-Shape structure
- 1100: L-Shape structure
- 112: Insulating material
- 12: Internal storage volume
- 13: Technical volume
- 14: Temperature Control System
- 20: Base
- 21: Central housing
- 210: Batterie modules
- 211: Tray
- 212: Lid
- 213: Edges
- 213a, 213b: Internal walls
- 2130a, 2130b: Internal areas
- 214: Permeable devices
- 215: Connection means
- 216: Protection elements
- 217: Sealing elements
- 22: Forklift tunnels
- 30: Solar panels
- 40a, 40b: Battery Modules
- 42: Fixation box
- 42a: Lower part
- 42b: Cover part

## Claims

1. Container (1) comprising a storage box (10) arranged on a base (20) comprising at least two forklift tunnels (22) and a central housing (21) between two forklift tunnels, a temperature control system (14) integrated to the container comprising at least a compressor, and an Electrical Power System comprising at least batterie cells feeding the temperature control system (14), said storage box (10) further comprising walls (11) defining an internal storage volume (12), said walls comprising an insulating material (112) providing a thermal isolation and a structural arrangement providing the mechanical resistance of the walls, **characterized in that** :
- the structural arrangement comprises non-metallic fibre containing material,
- **in that** the insulating material is selected among at least one panel of insulating material (112) having a density lower than 60 kg/m³, preferably lower than 50 kg/m³, around 30 kg/m³ or lower,
- **in that** the at least one panel of insulating material homogeneously covers all the surface of the structural arrangement, and
- **in that** said walls (11) are sandwich assemblies wherein the at least one panel of insulating material (112) is comprised between a first panel (110) and a second panel (111) of the structural arrangement.

2. Container according to claim 1, wherein the thermal conductivity of the at least one panel of insulating material is lower than 0,03 W/mK, preferably lower than 0.02 W/mK, around 0,018 W/mK or 0.016 W/mK or lower.

3. Container according to claims 1 or 2, wherein the at least one panel of insulating material has a density of around 30 kg/m³ and thermal conductivity of around 0,02 W/mK, 0.018 W/mK or lower.

4. Container according to one of claims 1 to 3, wherein one or each one of the first (110) and the second panels (111) of the structural arrangement form two or more contiguous walls in one piece.

5. Container according to claim 4, wherein said two or more contiguous walls form a ridge resulting from the angular position of the corresponding panels, and wherein the fibres within the non-metallic material are oriented according to a privilege direction crossing the angles between said contiguous walls.

6. Container according to one of claims 1 to 5, wherein the space between a first (110) and a second (111) panels of the structural element is free of reinforcing element so as to avoid any lack of insulating material.

7. Container according to one of claims 1 to 2, wherein said non-metallic fibre containing material denotes a composite material comprising E-Glass, S-Glass, Carbon, Aramid or a combination thereof.

8. Container according to claim 7, said non-metallic fibre containing material further comprising reinforcing fibres or veil or fabric,

9. Container according to one of claims 1 to 8, wherein said non-metallic fibre containing material is a prepreg composite material.

10. Container according to one claims 1 to 9, wherein said at least one panel of insulating material comprises or is based on polyisocyanurate (PIR).

11. Container according to one of claims 1 to 10, wherein said batteries cells are packed in a tray (211) arranged in a central housing (21), the tray having edges (213) and a lid (212), wherein the height of the edges is equal or larger than the thickness of the batteries cells, wherein said battery cells are of NiMH type and arranged so that their larger dimension is oriented in an horizontal plan.

12. Container according to claim 11, wherein the tray (211) further comprises at least one internal wall (213a, 213b) defining internal areas (2130a, 2130b) and wherein each battery module (40a, 40b) is arranged in a corresponding internal area (2130a, 2130b) of the tray (211).

13. Container according to one of claims 11 or 12, wherein said tray (211) further comprises one or more air permeable devices (214) such as a breather valve, allowing exchange of air and/or humidity between the internal space of the tray (211) and the outside environment, while preventing the passage of liquids.

14. Process for manufacturing a container according to claims 1 to 13, comprising :
- a moulding step to provide non-metallic fibre containing panels forming the first panel (110) and the second panel (111) of the structural arrangement,
- a combination step of combining at least one of said first panel (110) and said second panel (111) with the at least one panel of insulating material (112), wherein said at least one panel of insulating material is under the form of a rigid and homogenous panel, so that the at least one panel of insulating material covers all the surface of said at least one of the first panel (110) and the second panel (111).

15. Process according to claim 15, wherein combination step is performed at a temperature comprised between 90°C and 150°C and/or at a pressure comprised between 50 and 400 kPa (0.5 and 4 bars) with a vacuum applied to the internal structure comprised between -10 kPa (-0.1 bar) and -80 kPa (-0.8 bar).

## Patentansprüche

1. Ein Behälter (1) umfassend eine Aufbewahrungsbox (10), die auf einer Basis (20) angeordnet ist, wobei die Basis mindestens zwei Gabelstaplertunnel (22) und ein zentrales Gehäuse (21) aufweist, das zwischen den zwei Gabelstaplertunneln angeordnet ist, einen in den Behälter integrierten Temperaturkontrollsystem (14), das mindestens einen Kompressor aufweist, und ein elektrisches Stromversorgungssystem, das mindestens Batteriezellen aufweist, die das Temperaturkontrollsystem (14) speisen, wobei die Aufbewahrungsbox (10) ferner Wände (11) aufweist, die ein inneres Aufbewahrungsvolumen (12) definieren, wobei die Wände ein Isoliermaterial (112) aufweisen, das eine thermische Isolierung und eine strukturelle Anordnung bereitstellt, die den mechanischen Widerstand der Wände gewährleistet, **dadurch gekennzeichnet, dass**:
- die strukturelle Anordnung nicht-metallisches, faserhaltiges Material umfasst,
- dass das Isoliermaterial aus mindestens einer Platte aus Isoliermaterial (112) mit einer Dichte von weniger als 60 kg/m³, vorzugsweise weniger als 50 kg/m³, etwa 30 kg/m³oder weniger, ausgewählt ist,
- dass die mindestens eine Platte aus Isoliermaterial die gesamte Oberfläche der strukturellen Anordnung homogen bedeckt, und
- dass die Wände (11) Sandwich-Anordnungen sind, bei denen die mindestens eine Platte aus Isoliermaterial (112) zwischen einer ersten Platte (110) und einer zweiten Platte (111) der strukturellen Anordnung angeordnet ist.

2. Der Behälter nach Anspruch 1, wobei die Wärmeleitfähigkeit des mindestens einen Isoliermaterials geringer als 0,03 W/mK, vorzugsweise geringer als 0,02 W/mK, etwa 0,018 W/mK oder 0,016 W/mK oder geringer ist.

3. Der Behälter nach Anspruch 1 oder 2, wobei die mindestens eine Platte aus Isoliermaterial eine Dichte von etwa 30 kg/m³und eine Wärmeleitfähigkeit von etwa 0,02 W/mK, 0,018 W/mK oder weniger aufweist.

4. Der Behälter nach einem der Ansprüche 1 bis 3, wobei eine oder jede der ersten (110) und zweiten Platten (111) der strukturellen Anordnung zwei oder mehr aneinandergrenzende Wände in einem Stück bilden.

5. Der Behälter nach Anspruch 4, wobei die zwei oder mehr aneinandergrenzenden Wände einen Grat bilden, der sich aus der Winkelposition der entsprechenden Platten ergibt, und wobei die Fasern innerhalb des nichtmetallischen Materials gemäß einer Vorzugsrichtung ausgerichtet sind, die die Winkel zwischen den aneinandergrenzenden Wänden kreuzt.

6. Der Behälter nach einem der Ansprüche 1 bis 5, wobei der Raum zwischen einer ersten (110) und einer zweiten (111) Platte des Strukturelements frei von Verstärkungselementen ist, um einen Mangel an Isoliermaterial zu vermeiden.

7. Der Behälter nach einem der Ansprüche 1 bis 2, wobei das nicht-metallische faserhaltige Material ein Verbundmaterial bezeichnet, das E-Glas, S-Glas, Kohlenstoff, Aramid oder eine Kombination davon umfasst.

8. Der Behälter nach Anspruch 7, wobei das nichtmetallische faserhaltige Material ferner Verstärkungsfasern oder Verstärkungsschleier oder Verstärkungsgewebe umfasst.

9. Der Behälter nach einem der Ansprüche 1 bis 8, wobei das nicht-metallische faserhaltige Material ein Prepreg-Verbundmaterial ist.

10. Der Behälter nach einem der Ansprüche 1 bis 9, wobei die mindestens eine Platte aus Isoliermaterial Polyisocyanurat (PIR) umfasst oder darauf basiert.

11. Der Behälter nach einem der Ansprüche 1 bis 10, wobei die Batteriezellen in einem Träger (211) verpackt sind, der in einem zentralen Gehäuse (21) angeordnet ist, wobei der Träger Ränder (213) und einen Deckel (212) aufweist, wobei die Höhe der Ränder gleich oder größer als die Dicke der Batteriezellen ist, wobei die Batteriezellen vom NiMH-Typ sind und so angeordnet sind, dass ihre größere Abmessung in einer horizontalen Ebene ausgerichtet ist.

12. Der Behälter nach Anspruch 11, wobei der Träger (211) ferner mindestens eine Innenwand (213a, 213b) umfasst, die Innenbereiche (2130a, 2130b) definiert, und wobei jedes Batteriemodul (40a, 40b) in einem entsprechenden Innenbereich (2130a, 2130b) des Trägers (211) angeordnet ist.

13. Der Behälter nach einem der Ansprüche 11 oder 12, wobei der Träger (211) ferner eine oder mehrere luftdurchlässige Vorrichtungen (214), wie z. B. ein Entlüftungsventil, umfasst, die den Austausch von Luft und/oder Feuchtigkeit zwischen dem Innenraum der Träger (211) und der äußeren Umgebung ermöglichen, während sie den Durchtritt von Flüssigkeiten verhindern.

14. Ein Verfahren zur Herstellung eines Behälters nach einem der Ansprüche 1 bis 13, umfassend:
- einen Formgebungsschritt, um nichtmetallische Fasern enthaltende Platten bereitzustellen, die die erste Platte (110) und die zweite Platte (111) der strukturellen Anordnung bilden,
- einen Kombinationsschritt des Kombinierens mindestens einer der ersten Platte (110) und der zweiten Platte (111) mit der mindestens einen Platte aus Isoliermaterial (112),
wobei die mindestens eine Platte aus Isoliermaterial die Form einer starren und homogenen Platte hat, so dass die mindestens eine Platte aus Isoliermaterial die gesamte Oberfläche der mindestens einen der ersten Platte (110) und der zweiten Platte (111) bedeckt.

15. Das Verfahren nach Anspruch 14, wobei der Kombinationsschritt bei einer Temperatur zwischen 90°C und 150°C und/oder bei einem Druck zwischen 50 und 400kPa (0,5 und 4 bar) durchgeführt wird, wobei an die innere Struktur ein Vakuum zwischen -10kPa (-0,1 bar) und -80kPa (-0,8 bar) angelegt wird.

## Revendications

1. Conteneur (1) comprenant un coffre de stockage (10) disposé sur une base (20) comprenant au moins deux tunnels pour fourches (22) et un logement central (21) entre deux tunnels pour fourches, un système de contrôle de la température (14) intégré au conteneur comprenant au moins un compresseur, et un système d'alimentation électrique comprenant au moins des cellules de batterie alimentant le système de contrôle de la température (14), ledit coffre de stockage (10) comprenant en outre des parois (11) définissant un volume de stockage interne (12), lesdites parois comprenant un matériau isolant (112) assurant une isolation thermique et un agencement structurel assurant la résistance mécanique des parois, **caractérisé en ce que** :
- l'agencement structurel comprend un matériau contenant des fibres non métalliques,
- **en ce que** le matériau isolant est choisi parmi au moins un panneau de matériau isolant (112) ayant une densité inférieure à 60 kg/m³, de préférence inférieure à 50 kg/m³, d'environ 30 kg/m³ ou inférieure,
- **en ce que** le au moins un panneau de matériau isolant recouvre de manière homogène toute la surface de l'agencement structurel, et
- **en ce que** lesdites parois (11) sont des assemblages sandwich dans lesquels le au moins un panneau de matériau isolant (112) est compris entre un premier panneau (110) et un deuxième panneau (111) de l'agencement structurel.

2. Conteneur selon la revendication 1, dans lequel la conductivité thermique du au moins un matériau isolant est inférieure à 0,03 W/mK, de préférence inférieure à 0,02 W/mK, d'environ 0,018 W/mK ou 0,016 W/mK ou moins.

3. Conteneur selon les revendications 1 ou 2, dans lequel le au moins un panneau de matériau isolant a une densité d'environ 30 kg/m³ et une conductivité thermique d'environ 0,02 W/mK, 0,018 W/mK ou moins.

4. Conteneur selon l'une des revendications 1 à 3, dans lequel l'un ou chacun des premier (110) et deuxième (111) panneaux de l'agencement structurel forment deux ou plusieurs parois contiguës d'un seul tenant.

5. Conteneur selon la revendication 4, dans lequel lesdites deux ou plusieurs parois contiguës forment une arête résultant de la position angulaire des panneaux correspondants, et dans lequel les fibres à l'intérieur du matériau non métallique sont orientées selon une direction privilégiée traversant les angles entre lesdites parois contiguës.

6. Conteneur selon l'une des revendications 1 à 5, dans lequel l'espace entre un premier (110) et un deuxième (111) panneaux de l'élément structurel est exempt d'élément de renfort afin d'éviter tout manque de matériau isolant.

7. Conteneur selon l'une des revendications 1 à 2, dans lequel ledit matériau contenant des fibres non métalliques désigne un matériau composite comprenant du verre E, du verre S, du carbone, de l'aramide ou une combinaison de ceux-ci.

8. Conteneur selon la revendication 7, ledit matériau contenant des fibres non métalliques comprenant en outre des fibres de renfort ou un voile ou un tissu.

9. Conteneur selon l'une des revendications 1 à 8, dans lequel ledit matériau contenant des fibres non métalliques est un matériau composite préimprégné.

10. Conteneur selon l'une des revendications 1 à 9, dans lequel ledit au moins un panneau de matériau isolant comprend ou est à base de polyisocyanurate (PIR).

11. Conteneur selon l'une des revendications 1 à 10, dans lequel lesdites cellules de batterie sont empaquetées dans un plateau (211) disposé dans un boîtier central (21), le plateau ayant des bords (213) et un couvercle (212), dans lequel la hauteur des bords est égale ou supérieure à l'épaisseur des cellules de batterie, dans lequel lesdites cellules de batterie sont de type NiMH et disposées de telle sorte que leur plus grande dimension soit orientée dans un plan horizontal.

12. Conteneur selon la revendication 11, dans lequel le plateau (211) comprend en outre au moins une paroi interne (213a, 213b) définissant des zones internes (2130a, 2130b) et dans lequel chaque module de batterie (40a, 40b) est disposé dans une zone interne correspondante (2130a, 2130b) du plateau (211).

13. Conteneur selon l'une des revendications 11 ou 12, dans lequel ledit plateau (211) comprend en outre un ou plusieurs dispositifs perméables à l'air (214), tels qu'une valve de respiration, permettant l'échange d'air et/ou d'humidité entre l'espace interne du plateau (211) et l'environnement extérieur, tout en empêchant le passage de liquides.

14. Procédé de fabrication d'un conteneur selon les revendications 1 à 13, comprenant :
- une étape de moulage pour fournir des panneaux contenant des fibres non métalliques formant le premier panneau (110) et le deuxième panneau (111) de l'agencement structurel,
- une étape de combinaison consistant à combiner au moins l'un dudit premier panneau (110) et dudit deuxième panneau (111) avec au moins un panneau de matériau isolant (112),
dans lequel ledit au moins un panneau de matériau isolant se présente sous la forme d'un panneau rigide et homogène, de sorte que ledit au moins un panneau de matériau isolant recouvre toute la surface dudit au moins un parmi le premier panneau (110) et le second panneau (111).

15. Procédé selon la revendication 15, dans lequel l'étape de combinaison est réalisée à une température comprise entre 90 °C et 150 °C et/ou à une pression comprise entre 50 et 400 kPa (0,5 et 4 bars), avec un vide appliqué à la structure interne compris entre -10 kPa (-0,1 bar) et -80 kPa (-0,8 bar).
